Europäisches Patentamt

European Patent Office

Office européen des brevets

(19)

(11) Veröffentlichungsnummer: **0 330 716**
**A2**

(12) # EUROPÄISCHE PATENTANMELDUNG

(21) Anmeldenummer: **88103215.5**

(51) Int. Cl.⁴: **B29C 61/06**

(22) Anmeldetag: **02.03.88**

(43) Veröffentlichungstag der Anmeldung:
**06.09.89 Patentblatt 89/36**

(84) Benannte Vertragsstaaten:
**AT BE CH DE ES FR GB GR IT LI LU NL SE**

(71) Anmelder: **Claassen, Henning J.**
**Industriegebiet Hafen**
**D-2120 Lüneburg(DE)**

(72) Erfinder: **Claassen, Henning J.**
**Industriegebiet Hafen**
**D-2120 Lüneburg(DE)**
Erfinder: **Reicher, Alex c/o Du Pont de**
**Nemours**
**International S.A. 50-52, Route des Acacias**
**CH-1211 Genf 24(CH)**

(74) Vertreter: **Marx, Lothar, Dr.**
**Patentanwälte Schwabe, Sandmair, Marx**
**Stuntzstrasse 16 Postfach 86 02 45**
**D-8000 München 80(DE)**

(54) **Sich bei Erwärmung kräuselndes Flächengebilde und Verfahren und Vorrichtung zur Herstellung eines solchen Flächengebildes.**

(57) Ein sich bei Erwärmung kräuselndes Flächengebilde weist ein Substrat und in einen Klebstoff eingebettete, vorgereckte Elastomer-Fäden auf; die Elastomerfäden sind in eine elastische Schmelzkleberschicht eingebettet, die eine Oberfläche des unelastischen Substrates zumindest teilweise bedeckt. Es wurden auch ein Verfahren und Vorrichtung zur Herstellung eines solchen Flächengebildes angegeben.

FIG. 2

EP 0 330 716 A2

# Sich bei Erwärmung kräuselndes Flächengebilde und Verfahren und Vorrichtung zur Herstellung eines solchen Flächengebildes

Die Erfindung betrifft ein sich bei Erwärmung kräuselndes Flächengebilde der im Oberbegriff des Anspruchs 1 angegebenen Gattung sowie ein Verfahren und eine Vorrichtung zur Herstellung eines solchen Flächengebildes.

Solche Flächengebilde können insbesondere als elastische Bünde für Wegwerfkleidung, bspw. für kerntechnische Anlagen, aber auch bei elastischen Binden, Verbänden und Hygiene-Artikeln, wie bspw. Windeln, eingesetzt werden, um dichte, jedoch elastisch verformbare Abschlüsse zu erzielen.

Ein solches Flächengebilde geht aus der amerikanischen Patentschrift Nr. 4 640 859 hervor und weist ein Substrat sowie in einen Klebstoff eingebettete, vorgereckte Elastomer-Fäden, nämlich sogenannte "Spandex-Fasern", also Polyurethan-Elastomerfasern auf.

Bei dem bekannten Flächengebilde werden Filme bzw. Folien aus einem un elastischen, thermoplastischen Polymer, insbesondere auf der Basis von Ethylenvinylacetat (EVA)-Copolymeren verwendet, die von beiden Seiten auf die vorgereckten Elastomerfäden auflaminiert werden. Das Auflaminieren erfolgt unter Erwärmung, wobei die Wärmeenergie über eine Heizwalze zugeführt wird; anschließend muß das Laminat wieder gekühlt werden, um das Ausreagieren des Klebstoffes zu unterbrechen.

Die Herstellung dieses Flächengebildes ist wegen der Erwärmung und des anschließenden Abkühlens des Klebstoffes sehr aufwendig; außerdem müssen Klebstoffolien verwendet werden, die sehr kostspielig und in der Handhabung kompliziert sind.

Der Erfindung liegt deshalb die Aufgabe zugrunde, ein Flächengebilde der angegebenen Gattung zu schaffen, bei dem die oben erwähnten Nachteile nicht auftreten. Insbesondere soll ein Flächengebilde vorgeschlagen werden, das sich auf einfache und damit kostengünstige Weise herstellen läßt.

Dies wird erfindungsgemäß durch die im kennzeichnenen Teil des Anspruchs 1 angegebenen Merkmale erreicht.

Zweckmäßige Ausführungsformen werden durch die Merkmale der zugehörigen Unteransprüche definiert.

Außerdem sollen ein Verfahren und eine Vorrichtung zur Herstellung eines solchen Flächengebildet vorgeschlagen werden, die in wenigen, einfach zu realisierenden Schritten die Fertigung eines solchen Flächengebildes ermöglichen.

Dies wird erfindungsgemäß durch die in den kennzeichnenen Teilen der Ansprüche 8 und 12 angegebenen Merkmale erreicht.

Zweckmäßige Ausführungsformen werden durch die zugehörigen Unteransprüche definiert.

Die mit der Erfindung erzielten Vorteile beruhen darauf, daß keine kostspieligen und schwierig zu handhabenden Klebstoff-Folien aus EVA verwendet werden, sondern daß statt dessen ein elastischer Schmelzkleber auf eine Oberfläche des unelastischen Substrates aufgebracht wird. Für das Auftragen des Schmelzklebers stehen herkömmliche Geräte zur Verfügung, die technisch ausgereift ·und in verschiedenen Ausführungsformen erhältlich sind, so daß insoweit keine Modifikationen vorgenommen werden müssen. Der heiß aufgebrachte Schmelzkleber wird beim Kontakt mit dem Substrat sofort abgekühlt, so daß die sonst übliche, zusätzliche Abkühlung mittels einer Kühlrolle nicht mehr erforderlich ist.

Es reicht aus, wenn der Schmelzkleber nur partiell, bspw. in Form von Streifen, auf das Substrat aufgebracht wird, so daß sich im Vergleich mit den bisher üblichen Klebstoff-Folien eine relevante Materialeinsparung ergibt.

Als unelastisches Substrat können Nonwoven-Materialien, aber auch Folien verwendet werden; während es für einige Anwendungen ausreicht, wenn die Elastomerfäden nur auf einer Seite durch das Substrat bedeckt werden, ist es in gleicher Weise auch möglich, die Elastomerfäden auf beiden Seiten durch das Substrat zu umgeben.

Der Schmelzkleber kann durch Aufsprühen oder durch Auftragen mittels einer Spritzdüse aufgebracht werden; hierbei können die üblichen Techniken eingesetzt werden.

Zweckmäßigerweise werden polyfile Elastomerfäden eingesetzt, um die gewünschte Elastizität zu gewährleisten.

Die Erfindung wird im folgenden anhand von Ausführungsbeispielen unter Bezugnahme auf die beiliegenden, schematischen Zeichnungen näher erläutert. Es zeigen

Fig. 1a- 1l Schnittdarstellungen von verschiedenen Ausführungsformen des Flächengebildes,

Fig. 2 eine Schemadarstellung einer Vorrichtung zur Herstellung von Flächengebilden,

Fig. 3 eine Ansicht eines gekräuselten Flächengebildes,

Fig. 4 im vergrößerten Maßstab das Aufbringen der Schmelzkleberschicht,

Fig. 5 im vergrößerten Maßstab eine Modifikation des Aufbringens der Schmelzkleberschicht, und

Fig. 6 im vergrößerten Maßstab eine weitere Modifikation des Aufbringens der Schmelzkleberschicht.

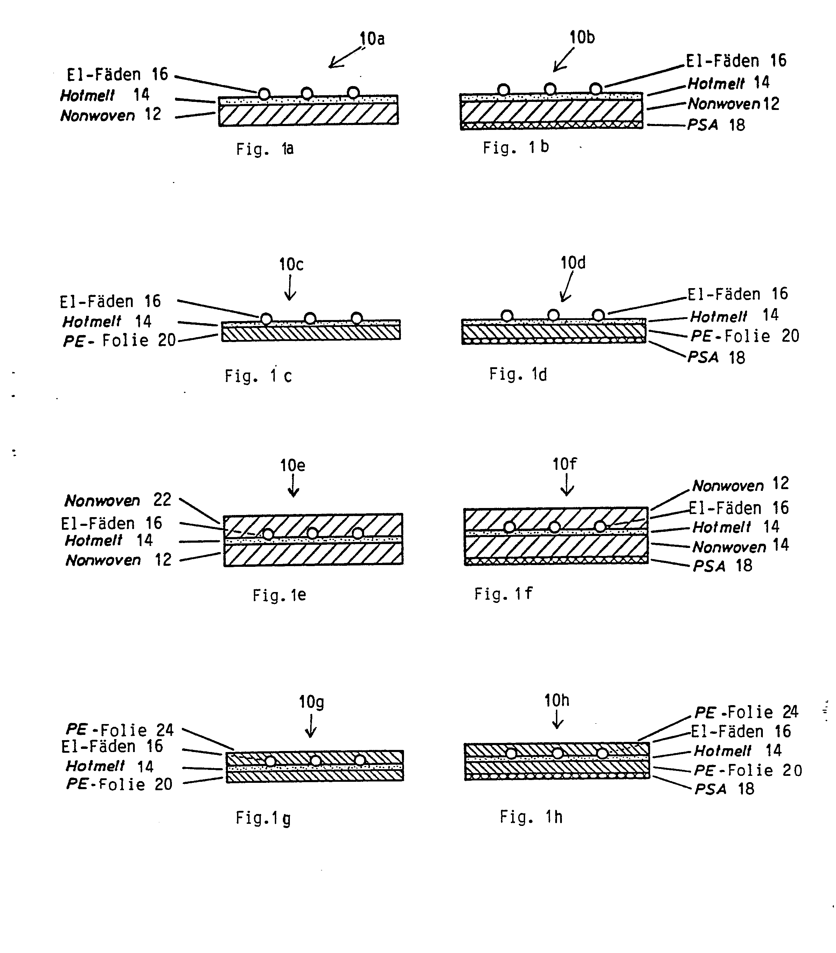

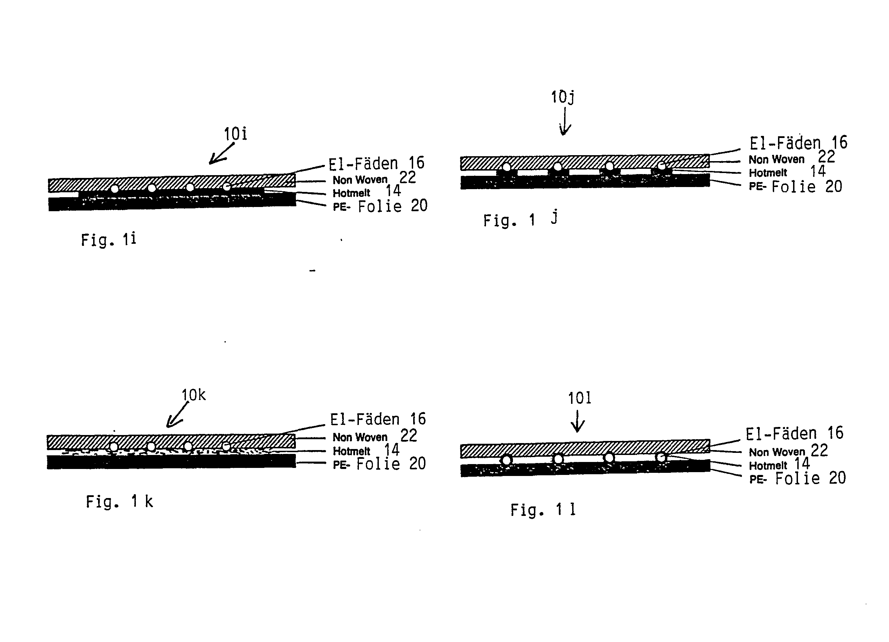

Das aus Figur 1a ersichtliche, allgemein durch das Bezugszeichen 10a angedeutete Flächengebilde weist ein Substrat 12 aus einem Nonwoven-Material auf, das auf einer Seite mit einem Hotmelt oder Schmelzkleber 14 versehen ist. In die geschlossene Schmelzkleber-Schicht 14 sind Elastomer-Fäden 16 aus "Lycra" eingebettet, von Du Pont hergestellten und vertriebenen polyfilen Elastomerfäden auf der Basis von Polyurethan.

Das Flächengebilde 10b nach Figur 1b unterscheidet sich dadurch von dem Flächengebilde 10a nach Figur 1a, daß die von der Hotmeltschicht 14 abgewandte Oberfläche des Substrates 12 mit einer Schicht 18 aus einem Schmelzhaftkleber auf der Basis von PSA versehen ist. Dadurch läßt sich dieses Flächengebildes 10b ohne weiteres auf eine Unterlage aufkleben, bspw. auf die Ärmelöffnung eines Kleidungsstückes.

Das Flächengebilde 10c nach Figur 1c unterscheidet sich dadurch von dem Flächengebildet 10a nach Figur 1a, daß das als Substrat dienenden Nonwoven-Material 12 durch eine Polyethylenfolie 20 ersetzt ist.

Analog zu dem Flächengebilde 10b nach Figur 1b ist bei dem Flächengebilde 10d nach Figur 1d die Polyethylenfolie 20 auf einer Seite mit einer Schicht 18 aus einem Schmelzhaftkleber auf der Basis von PSA versehen.

Figur 1e zeigt ein Flächengebilde 10e, das den gleichen Grundaufbau wie das Flächengebilde 10a hat, jedoch mit einem zusätzlichen Substrat 22 aus Nonwoven-Material versehen ist, so daß die Schmelzkleberschicht 14 und die Elastomerfäden 16 auf beiden Seiten durch Substrate 12 bzw. 22 umgeben sind.

Analog zu den Ausführungsformen nach Figur 1b und 1d weist das Flächengebilde 10f nach Figur 1f eine zusätzliche Schmelzkleberschicht 18 auf der Basis von PSA auf, die auf einer Seite des Substrates 14 aus Nonwoven-Material vorgesehen ist.

Figur 1g zeigt eine Ausführungsform 10g des Flächengebildet, bei der die beiden Substrate 12, 22 des Flächengebildet 10e nach Figur 1e durch Polyethylen-Folien 20 und 24 gebildet werden; die Schmelzkleberschicht 14 und die Elastomerfäden 14 werden also auf beiden Seiten durch Polyethylenfilme 20, 24 bedeckt.

Bei dem Flächengebilde 10h nach Figur 1h ist eine Seite der Polyethylenfolie 20 durch eine Schicht 18 aus einem Schmelzhaftkleber auf der Basis von PSA bedeckt.

Figur 1i zeigt eine Ausführungsform eines Flächengebildes 10i, bei der unterschiedliche Substrate verwendet werden, nämlich eine Polyethylenfolie 20 auf der einen Seite und ein Nonwoven-Material 22 auf der anderen Seite. Dadurch sind wieder die Schmelzkleberschichten 14 und die Elastomerfäden 16 auf beiden Seiten durch Substrate 20, 22 bedeckt.

Figur 1j zeigt eine weitere Variante eines Flächengebildes 10j, die im wesentlichen der Ausführungsform nach Figur 1i entspricht; dabei ist jedoch die Schmelzkleberschicht 14 nur partiell, also nicht vollflächig aufgebracht, sondern in Form von Streifen, die sich zwischen den beiden Substraten 20, 22 erstrecken. Die Elastomerfäden 16 müssen dann mit den Schmelzkleber-Streifen 14 so ausgerichtet sein, daß sie in den Schmelzkleber 14 eingebettet sind, wie man in Figur 1j erkennen kann.

Figur 1k zeigt eine Ausführungsform 10k des Flächengebildes, bei der die Schmelzkleberschicht 14 nicht aufgetragen, sondern aufgesprüht worden ist.

Darüberhinaus entspricht der Aufbau im wesentlichen dem des Flächengebildes 10i nach Figur 1i.

Figur 1l zeigt schließlich eine Ausführungsform eines Flächengebildes 10l mit zwei Substraten, nämlich einem unteren Substrat aus einer Polyethylenfolie 20 und einem oberen Substrat aus einem Nonwoven-Material 22. Hierbei sind mit einer Spezialdüse die Elastomärfäden 16 mit dem Schmelzkleber beschichtet worden. Die beschichteten Elastomerfäden 16 sind ebenfalls von beiden Seiten durch Substrate 20, 22 umgeben.

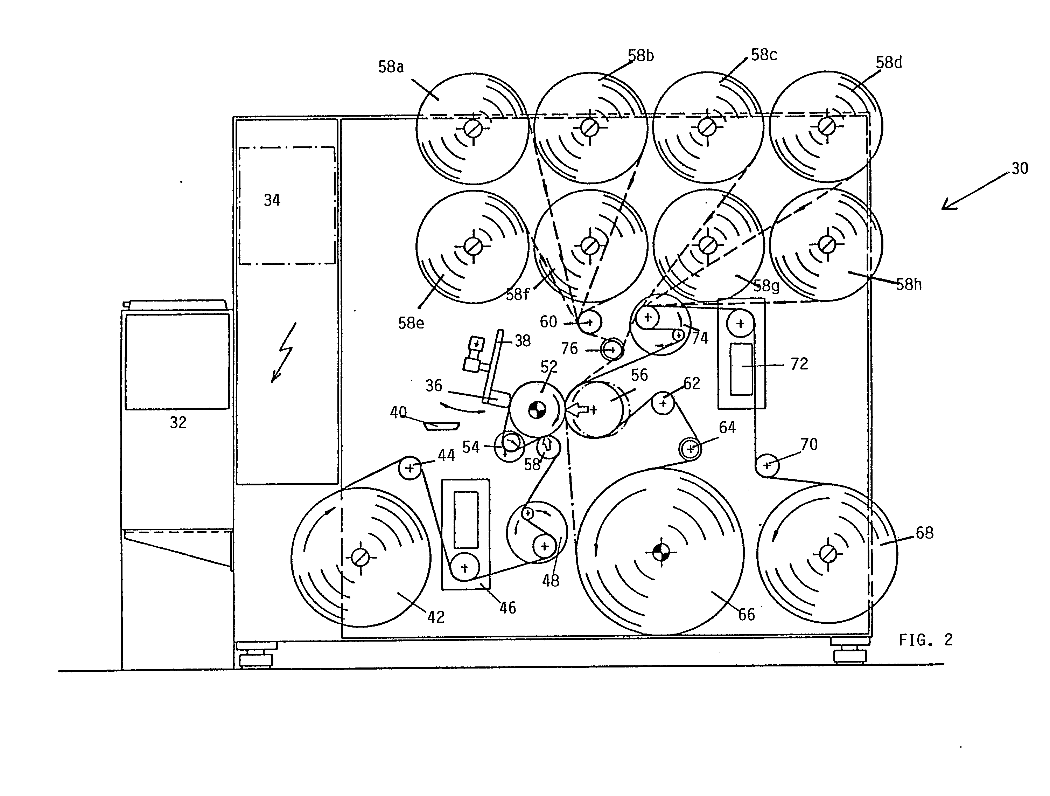

Figur 2 zeigt eine allgemein durch das Bezugszeichen 30 angedeutete Vorrichtung zur Herstellung solcher Flächengebilde, die ein Schmelzgerät 32 mit einem Bedienungsfeld 34 mit Schaltschrank aufweist. Das Schmelzgerät 32 ist über einen Schmelzkleberschlauch (nicht dargestellt) mit dem eigentlichen Auftragkopf 36 verbunden, der mittels einer Schwenkhalterung 38 in Richtung des Doppelpfeils hin- und hergeschwenkt werden kann. In der dargestellten Lage befindet sich der Auftragkopf 36 in der Betriebsstellung; in der anderen Lage ist der Auftragkopf 36 über einer Auffangwanne 40 angeordnet, in der der nach unten tropfende, flüssige Schmelzkleber aufgefangen wird.

Das zu beschichtende Substrat 42, bpsw. Vliesstoff, Textilmaterial, Folien, insbesondere aus Kunststoff, befindet sich auf einer in Richtung des Pfeils drehbaren Spule und wird von dieser über eine Umlenkrolle 44, eine Seitenkantensteuerung 46 und eine Bahnbremse 48 in den Spalt zwischen einer Andruckwalze 50 und einer Beschichtungswalze 52, die sich in Richtung des Pfeils dreht, geführt. Von dem Spalt zwischen der Andruckwalze 50 und der Beschichtungswalze 52 gelangt das Substrat 42 über eine weitere Umlenkwalze 54 in den Spalt zwischen dem Auftragkopf 36 und der Beschichtungswalze 52, so daß mittels eines üblichen Beschichtungskopfes oder einer Sprühdüse der verflüssigte Schmelzkleber in Streifen oder vollflächig auf das Substrat 42 aufgebracht werden kann.

Das Substrat 42 läuft dann weiter um die Beschichtungswalze 52 in den Spalt zwischen der Beschichtungswalze 52 und einer Kaschierwalze 56.

In den Spalt zwischen der Beschichtungswalze 52 und der Kaschierwalze 56 werden außerdem Elastomerfäden von den dargestellten acht Spulen 58a, 58b ... 58h eingeführt. Die Elastomerfäden verlaufen von den Spulen 58a bis 58h über Umlenkwalzen 60, 76 und werden dabei so geführt, daß sie parallel zueinander den Spalt zwischen der Beschichtungswalze 52 und der Kaschierwalze 56 erreichen und in die Schmelzkleberschicht auf dem Substrat 42 eingebettet werden.

Das mit Schmelzkleber beschichtete und mit den eingebetten Elastomerfäden versehene Substrat verläuft um die Kaschierwalze 56 und über weitere Umlenkwalzen 62, 64 zu einer Spule 66, auf die das beschichtete Substrat aufgewickelt wird.

Mit dem bisher beschriebenen Teil der Vorrichtung 30 können Flächengebilde entsprechend den Ausführungsformen 10a und 10C nach den Figuren 1a und 1c hergestellt werden, also Flächengebilde 10a, 10C mit einem einzigen Substrat.

Sollen die Schmelzkleberschicht und die Elastomerfäden auf beiden Seiten durch Substrate abgedeckt werden, also ein sogenannter "Sandwich-Verbund" hergestellt werden, so wird eine Spule 68 mit einem weiteren Substrat aus Vliesstoff, Textilmaterial, Folien, insbesondere Kunststoffolien benutzt, das über eine Umlenkwalze 70, eine Seitenkantensteuerung 72, eine Bahnbremse 74 und die Umlenkwalze 76 dem Spalt zwischen der Beschichtungswalze 52 und der Kaschierwalze 56 in der Weise zugeführt wird, daß dieses Substrat 68 die Elastomerfäden und die Schmelzkleberschicht bedeckt. Da hierbei größere Laminat-Dicken auftreten, kann die Kaschierwalze 56 in Richtung des Pfeils verstellt werden, wie durch die strichpunktierte Linie angedeutet ist, so daß man die Vorrichtung 30 diesen unterschiedlichen Laminat-Dicken anpassen kann.

Das mit zwei Substraten versehene Flächengebilde muß nicht über die Umlenkwalzen 62, 64 geführt, sondern kann nun direkt auf die Spule 66 aufgewickelt werden.

Die Abrollgeschwindigkeit für die Elastomerfäden von den Spulen 58a bis 58h wird in einer bestimmten Relation zur Abrollgeschwindigkeit des Substrates 42 bzw. der Substrate 42, 68 gesteuert, wobei nach einer bevorzugten Ausführungsform mit einem Geschwindigkeitsverhältnis im Bereich von 1:2 bis 1:5 gearbeitet wird; dadurch können die Elastomerfäden vor dem Kaschieren auf das Substrat mit einer Dehnung von etwa 400 % vorgereckt werden.

Wenn weniger als acht Elastomer-Fäden erforderlich sind, kann auf einige der Spulen 58a bis 58h verzichtet werden. Im umgekehrten Fall können noch zusätzliche Spulen vorgesehen werden, falls mehr als acht Elastomerfäden benötigt werden.

Die Abwickelgeschwindigkeit der Elastomerfäden von den Spulen 58a bis 58h wird über Gleichstromantriebe gesteuert, um die erwähnten Geschwindigkeitsbeziehungen einhalten zu können. Die Abwickelanlage für die Elastomerfäden muß jedoch nicht integrierter Bestandteil dieser Vorrichtung 30 sein; als Alternative hierzu ist es auch möglich, getrennte Abwicklungsstände für die Elastomerfäden vorzusehen, die elektrisch mittels eines Leitspannungsgebers mit der eigentlichen Beschichtungsvorrichtung 30 verknüpft sind.

Wie erwähnt, kann der Auftragkopf 36 mit einer Schlitzdüse oder einer Sprühdüse für das Aufbringen des Schmelzklebers versehen sein.

Auf der Kaschierwalze 56 befindet sich eine Schicht aus einem nicht haftenden Material, um zu verhindern, daß das beschichtete Substrat an der Oberfläche der Kaschierwalze 56 haftet.

Als Schmelzkleber wird bevorzugt ein Hotmelt auf der Basis eines elastischen Ethylenvinylacetat (EVA) Schmelzklebers verwendet.

Falls erforderlich, kann an der Bahn des beschichteten Substrates ein weiterer Auftragskopf (nicht dargestellt) vorgesehen werden, der bspw. entsprechend der Ausführungsform 10b nach Figur 1b eine Schicht aus einem Schmelzhaftkleber auf der Basis von PSA auf das beschichtete Substrat aufbringt.

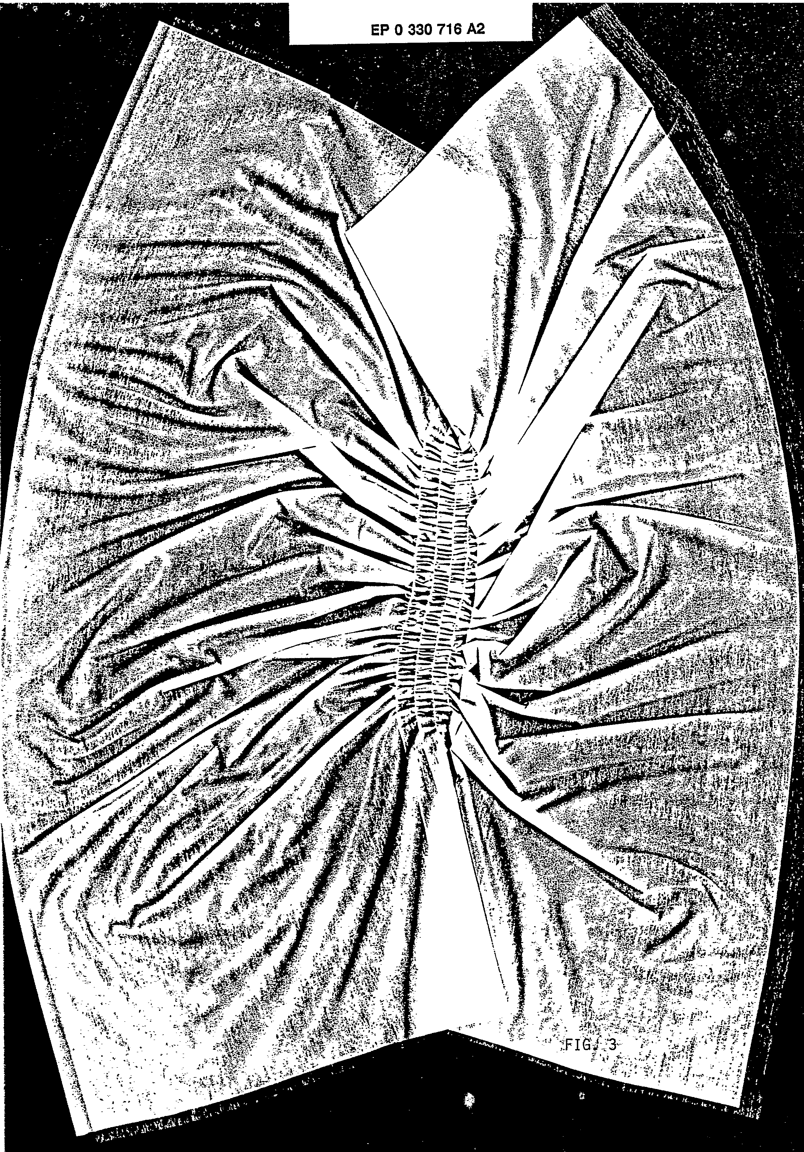

Diese Flächengebilde werden als Bahnmaterial hergestellt und zu Spulen 66 aufgerollt, so daß sie problemlos gehandhabt, insbesondere transportiert werden können. Zur Benutzung werden Stücke gewünschter Länge von dem Bahnmaterial abgeschnitten und kurz erwärmt, wodurch der Schmelzkleber aktiviert wird und das Flächengebilde zusammenzieht, so daß es zu der Kräuselform kommt, wie sie aus Figur 3 der Zeichnungen ersichtlich ist.

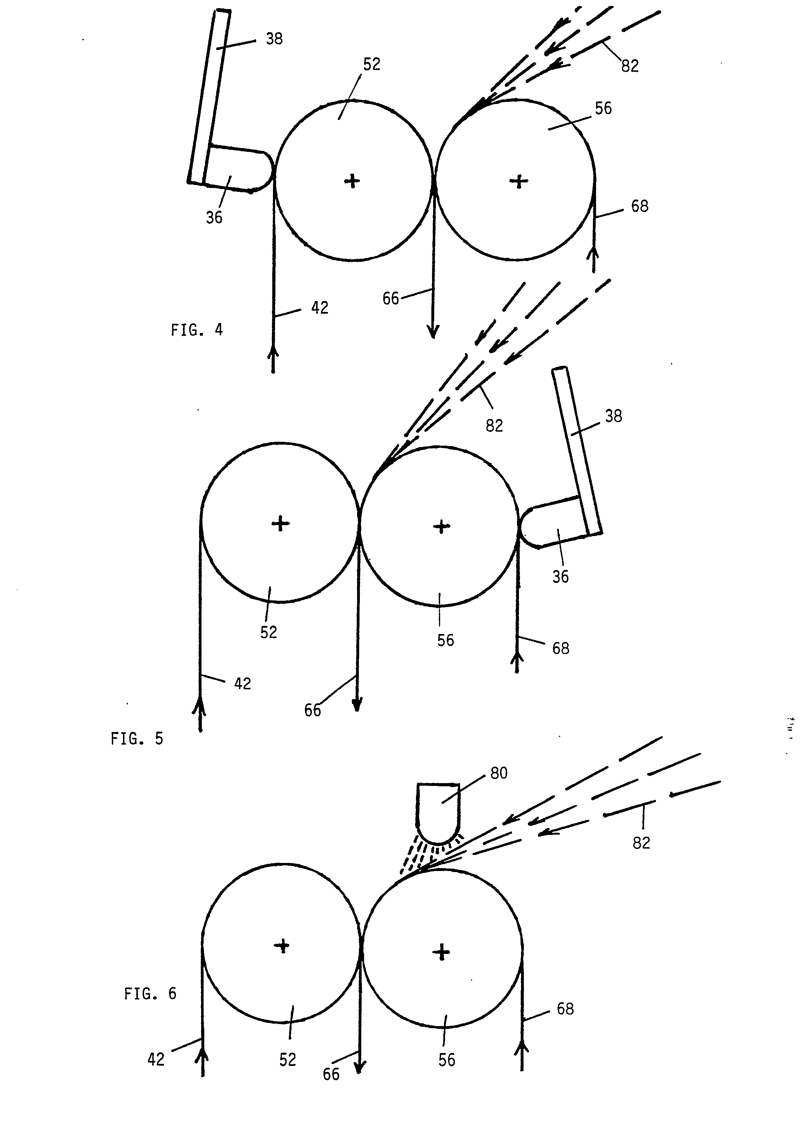

Figur 4 zeigt im vergrößerten Maßstab das Aufbringen der Schmelzkleberschicht; dabei wird ein Substrat 42 um die Beschichtungswalze 52 geführt und dabei mittels des Auftragkopfes 36 mit der Schmelzkleberschicht versehen; das andere Substrat 68 wird um die Kaschierwalze 56 geführt; vor dem Erreichen des Spaltes zwischen Beschichtungswalze 52 und Kaschierwalze 56 werden die Elastomerfäden 82 in Anlage an das Substrat 68 auf der Kaschierwalze 56 gebracht, so daß das mit der Schmelzkleberschicht versehene Substrat 52 einerseits und das Substrat 68 mit den Elastomerfäden 82 andererseits in den Spalte zwischen Beschichtungswalze 52 und Kaschierwalze 56 eingeführt werden. Aus diesem Spalt tritt das Flächengebildet 66 aus, das bei dieser Ausführungsform bspw. dem Flächengebilde 10e nach Figur 1e entspricht.

Figur 5 zeigt eine Modifikation, bei der das Substrat 42 um die Beschichtungswalze 52 geführt wird. Das Substrat 68 wird durch den Auftragkopf 36 mit einer Schmelzkleberschicht versehen und läuft um die Kaschierwalze 56; die Elastomerfäden 82 werden so zugeführt, daß sie vor dem Erreichen des Spaltes in Anlage an das beschichtete Substrat 68 kommen; hier werden also das Substrat 42 einerseits und das beschichtete Substrat 68 mit den Elastomerfäden 42 andererseits in den Spalt zwischen Beschichtungswalze 52 und Kaschierwalze 56 eingeführt; aus diesem Spalt tritt das Flächengebilde 66 aus, das ebenfalls der Ausführungsform 10e nach Figur 1e entspricht.

Figur 6 zeigt eine Variante, bei der das Substrat 42 um die Beschichtungswalze 52 und das Substrat 68 um die Kaschierwalze 56 geführt werden. Die Elastomerfäden 82 werden in Anlage an das Substrat 68 auf der Beschichtungswalze 56 gebracht, so daß das Substrat 68 und die Elastomerfäden 82 gemeinsam in den Spalt zwischen Beschichtungswalze 52 und Kaschierwalze 56 eingeführt werden. über der Bahn der Elastomerfäden 82 befindet sich ein Sprühkopf 80, der einen Sprühnebel auf die vorbeilaufenden Elastomerfäden 82 richtet, so daß die Elastomerfäden 82 einzeln durch eine Schmelzkleberschicht umhüllt werden. Das hierbei entstehende Flächengebilde 66 entspricht der Ausführungsform 10k nach Figur 1k.

## Ansprüche

1. Sich bei Erwärmung kräuselndes Flächengebilde aus
    a) einem Substrat, und
    b) in einen Klebstoff eingebetteten, vorgereckten Elastomer-Fäden, **dadurch gekennzeichnet,** daß
    c) die Elastomerfäden (16) in eine elastische Schmelzkleberschicht (14) eingebettet sind,
    d) die eine Oberfläche des unelastischen Substrates (12, 20) zumindest teilweise bedeckt.

2. Flächengebilde nach Anspruch 1, dadurch gekennzeichnet, daß polyfile Elastomerfäden auf der Basis von Polyurethan verwendet werden.

3. Flächengebilde nach einem der Ansprüche 1 oder 2, dadurch gekennzeichnet, daß die Schmelzkleberschicht (14) und die Elastomerfäden (16) auf beiden Seiten durch ein Substrat (12, 20; 22, 24) bedeckt sind.

4. Flächengebilde nach einem der Ansprüche 1 bis 3, dadurch gekennzeichnet, daß ein Schmelzkleber auf der Basis eines elastischen Ethylvinylacetet (EVA)-Polymers verwendet wird.

5. Flächengebilde nach einem der Ansprüche 1 bis 4, dadurch gekennzeichnet, daß als Substrat(e) Folien, insbesondere Kunststoffolien (20, 24), oder Nonwoven-Materialien (12, 22) vorgesehen sind.

6. Flächengebilde nach einem der Ansprüche 1 bis 5, dadurch gekennzeichnet, daß die Elastomerfäden (16) um 200 bis 500 % vorgereckt sind.

7. Flächengebilde nach einem der Ansprüche 1 bis 6, dadurch gekennzeichnet, daß die freie Oberfläche des Substrates (14, 20) mit einer Schicht aus einem Schmelzhaftkleber (18) versehen ist.

8. Flächengebilde nach einem der Ansprüche 1 bis 7, dadurch gekennzeichnet, daß die Elastomerfäden (16) einzeln durch die elastische Schmelzkleberschicht (14) umgeben sind.

9. Verfahren zur Herstellung eines Flächengebildes nach einem Ansprüche 1 bis 8, dadurch gekennzeichnet, daß
    e) ein Schmelzkleber das Substrat und die Elastomerfäden in dem Spalt zwischen einer Beschichtungswalze und einer Kaschierwalze zusammengeführt werden, und daß
    f) anschließend das Substrat ohne Kühlung aufgewickelt wird.

10. Verfahren nach Anspruch 9, dadurch gekennzeichnet, daß der Schmelzkleber mittels einer Sprühdüse oder einer Schlitzdüse auf das Substrat aufgebracht wird.

11. Verfahren nach einem der Ansprüche 9 oder 10, dadurch gekennzeichnet, daß ein weiteres Substrat in den Spalt zwischen der Beschichtungswalze und der Kaschierwalze eingeführt wird.

12. Verfahren nach einem der Ansprüche 9 bis 11, dadurch gekennzeichnet, daß die Schmelzkleberschicht zumindest partiell auf die Oberfläche des um die Beschichtungswalze geführten Substrates aufgebracht wird, und daß die Elastomerfäden und das weitere Substrat gemeinsam in den Spalt zwischen der Beschichtungswalze und der Kaschierwalze eingeführt werden.

13. Verfahren nach einem der Ansprüche 9 bis 11, dadurch gekennzeichnet, daß das zumindest partiell mit der Schmelzkleberschicht versehene Substrat und die Elastomerfäden gemeinsam in den Spalt zwischen der Beschichtungswalze und der Kaschierwalze eingeführt werden.

14.Verfahren nach einem der Ansprüche 9 bis 13, dadurch gekennzeichnet, daß der Schmelzkleber durch Sprühen auf die Elastomerfäden aufgebracht wird.

15. Verfahren nach einem der Ansprüche 9 bis 14, bei dem die Elastomerfäden von Spulen abgewickelt werden, dadurch gekennzeichnet, daß die Abrollgeschwindigkeit der Elastomerfäden in Bezug auf die Abrollgeschwindigkeit des bzw. jedes Substrates so gesteuert wird, daß sich ein Geschwindigkeitsverhältnis im Bereich von 1:2 bis 1:5 ergibt.

16. Vorrichtung zur Herstellung eines Flächengebildes nach einem der Ansprüche 1 bis 8, gekennzeichnet durch die folgenden Merkmale:

g) eine erste Abwickelstation für das Substrat (42);

h) ein Schmelzgerät zum Auftragen einer zumindest partiellen Schmelzkleberschicht auf das abgewickelte Substrat oder auf die Elastomerfäden;

i) eine Beschichtungswalze (52) und eine an der Beschichtungswalze (52) anliegende Kaschierwalze (56); und

j) eine Abwickelstation (58a, 58b ... 58h) für die Elastomerfäden, die in vorgegebener räumlicher Anordnung zusammen mit dem Substrat und dem Schmelzkleber in den Spalt zwischen Beschichtungswalze (52) und Kaschierwalze (56) eingeführt werden.

17.Vorrichtung nach Anspruch 16, gekennzeichnet durch eine zweite Abwickelstation (68) für ein zweites Substrat, das in den Spalt zwischen der Beschichtungswalze (52) und der Kaschierwalze (56) eingeführt wird.

18.Vorrichtung nach einem der Ansprüche 16 und 17, gekennzeichnet durch einen zweiten Auftragskopf (36) für die Aufbringung einer Schicht aus einem Schmelzhaftkleber auf eine Oberfläche eines Substrates.

19. Vorrichtung nach einem der Ansprüche 16 bis 18, dadurch gekennzeichnet, daß das Schmelzgerät als Sprühvorrichtung ausgebildet ist, die eine Schmelzkleberschicht auf die Elastomerfäden aufsprüht.

10a

El-Fäden 16
Hotmelt 14
Nonwoven 12

Fig. 1a

10b

El-Fäden 16
Hotmelt 14
Nonwoven 12
PSA 18

Fig. 1b

10c

El-Fäden 16
Hotmelt 14
PE-Folie 20

Fig. 1c

10d

El-Fäden 16
Hotmelt 14
PE-Folie 20
PSA 18

Fig. 1d

10e

Nonwoven 22
El-Fäden 16
Hotmelt 14
Nonwoven 12

Fig. 1e

10f

Nonwoven 12
El-Fäden 16
Hotmelt 14
Nonwoven 14
PSA 18

Fig. 1f

10g

PE-Folie 24
El-Fäden 16
Hotmelt 14
PE-Folie 20

Fig. 1g

10h

PE-Folie 24
El-Fäden 16
Hotmelt 14
PE-Folie 20
PSA 18

Fig. 1h

10i

El-Fäden 16
Non Woven 22
Hotmelt 14
PE- Folie 20

Fig. 1i

10j

El-Fäden 16
Non Woven 22
Hotmelt 14
PE- Folie 20

Fig. 1 j

10k

El-Fäden 16
Non Woven 22
Hotmelt 14
PE- Folie 20

Fig. 1 k

10l

El-Fäden 16
Non Woven 22
Hotmelt 14
PE- Folie 20

Fig. 1 l

FIG. 2

EP 0 330 716 A2

FIG. 3

FIG. 4

FIG. 5

FIG. 6